(19) Europäisches Patentamt
European Patent Office
Office européen des brevets

(11) **EP 4 786 216 A1**

(12) **EUROPEAN PATENT APPLICATION**
published in accordance with Art. 153(4) EPC

(43) Date of publication:
05.08.2026 Bulletin 2026/32

(51) International Patent Classification (IPC):
*B60G 17/018* (2006.01)    *B60G 17/015* (2006.01)
*B60G 17/08* (2006.01)

(21) Application number: 24869610.6

(22) Date of filing: 08.03.2024

(86) International application number:
PCT/CN2024/080701

(87) International publication number:
WO 2025/066039 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 CN 202311277861

(71) Applicant: BYD Company Limited
Shenzhen, Guangdong 518118 (CN)

(72) Inventors:
• ZHANG, Hongzhou
Shenzhen, Guangdong 518118 (CN)

• LIAO, Yinsheng
Shenzhen, Guangdong 518118 (CN)
• ZHANG, Guangcheng
Shenzhen, Guangdong 518118 (CN)
• LI, Youbiao
Shenzhen, Guangdong 518118 (CN)
• WAN, Pengfei
Shenzhen, Guangdong 518118 (CN)

(74) Representative: Taor, Simon Edward William et al
Venner Shipley LLP
TIDE Bankside
8 Emerson Street
London SE1 9DU (GB)

(54) **VEHICLE SUSPENSION SYSTEM, AND METHOD AND VEHICLE**

(57)    The present disclosure relates to a vehicle suspension system, a method, and a vehicle. The vehicle suspension system (100) includes a plurality of height sensors (10). The height sensors (10) are configured to detect a height of a vehicle body, and the system is configured to maintain some suspension functions of the vehicle suspension system available when some of the plurality of height sensors (10) fail.

FIG. 1a

**Description**

**CROSS-REFERENCE TO RELATED APPLICATIONS**

The present disclosure claims priority to Chinese Patent Application No. 202311277861.X, filed on September 28, 2023 and entitled "VEHICLE SUSPENSION SYSTEM, METHOD, AND VEHICLE", which is incorporated herein by reference in its entirety.

**TECHNICAL FIELD**

The present disclosure relates to the field of vehicle control technologies, and more specifically, to a vehicle suspension system, a method, and a vehicle.

**BACKGROUND**

A suspension system of a vehicle is connected between a vehicle body and a tire to transmit a force between a wheel and the vehicle body. Main functions of the suspension system include buffering, vibration filtering, and guidance. The suspension system may be classified into a passive suspension, a semi-active suspension, and a fully active suspension (referred to as an active suspension below) based on control types. The passive suspension is usually a suspension with a fixed damping force and can only move passively following wheels. The semi-active suspension enables passive adjustment of a damping force by incorporating an electronic control element. The active suspension performs dynamical and adaptive adjustment based on a driving condition (for example, a motion state of the vehicle and a road surface condition) of the vehicle. For example, a height of the vehicle body may be adjusted by using the active suspension, so as to adapt to the road surface condition and the like.

To implement closed-loop control of the active suspension to perform precise adjustment of the height of the vehicle body, the suspension system is provided with a plurality of height sensors to detect a height between a vehicle body action point and a corresponding wheel. When the height sensor fails, the suspension system suppresses all suspension functions, which prevents further adjustment of a state of the vehicle body and poses a safety risk.

**SUMMARY**

An objective of embodiments of the present disclosure is to provide a new technical solution for a suspension system, so as to improve safety of a vehicle whose height sensor is in a failed state.

According to a first aspect of the present disclosure, an embodiment of a vehicle suspension system is provided, and the system includes:

a plurality of height sensors, the height sensors being configured to detect a height of a vehicle body; and
the system being configured to maintain some suspension functions of the vehicle suspension system available when some of the plurality of height sensors fail.

Optionally, when some height sensors fail, types and/or a quantity of available suspension functions of the vehicle suspension system vary based on a quantity of failed height sensors.

Optionally, the quantity of available suspension functions varies based on the quantity of failed height sensors. A greater quantity of failed height sensors indicates a smaller quantity of available suspension functions.

Optionally, when some height sensors fail and the vehicle body can be leveled, the types and/or the quantity of available suspension functions are determined based on the quantity of failed height sensors. That the vehicle body can be leveled means that each of a pitch angle and a roll angle of the vehicle body can be adjusted to be within a corresponding angle range.

Optionally, when some height sensors fail and the vehicle body cannot be leveled, the type of the available suspension function is different from the type of the available suspension function when the vehicle body can be leveled, and that the vehicle body cannot be leveled means that either the pitch angle or the roll angle of the vehicle body cannot be adjusted to be within the corresponding angle range; and/or
when some height sensors fail and the vehicle body cannot be leveled, the quantity of available suspension functions is less than the quantity of available suspension functions when the vehicle body can be leveled.

Optionally, the suspension function includes a damping control function, a stiffness control function, a height adjustment function, and a height adjustment suppression function.

The height adjustment function includes at least one of a voice-controlled height adjustment function, a manual height adjustment function, a speed-dependent height adjustment function, a camping leveling function, an ultra-high escape function, a welcome function, an access function, a load balancing function, or a height return function.

The height adjustment suppression function includes at least one of a manual height adjustment suppression function, an automatic height adjustment suppression function, a suppression function of stopping height adjustment during a collision, or a suppression function of stopping height adjustment during maintenance.

Optionally, when a single height sensor fails, the available suspension function includes some functions in the height adjustment function, as well as the height adjustment suppression function, the damping control function, and the stiffness control function; or

when two height sensors fail, the available suspension function includes the height adjustment suppression function and the damping control function; or

when three height sensors fail, the available suspension function includes the height adjustment suppression function.

Optionally, when a single height sensor fails, an unavailable height adjustment function includes at least one of the load balancing function, the ultra-high escape function, the camping leveling function, or the voice-controlled height adjustment function.

Optionally, when the height sensor experiences one of two cases where hardware fails or an output value exceeds a limit range, the height sensor fails.

Optionally, when duration in which the height sensor experiences one of the two cases where the hardware fails or the output value exceeds the limit range reaches first duration, the height sensor fails.

Optionally, the vehicle suspension system further includes a plurality of dampers, and each of the dampers is disposed corresponding to each height sensor.

When some height sensors fail, a height of a damper corresponding to the failed height sensor is adjusted based on a height of a damper corresponding to a valid height sensor, to adjust each of the pitch angle and the roll angle of the vehicle body to be within the corresponding angle range.

According to a second aspect of the present disclosure, an embodiment of a vehicle control method is further provided, where the method includes:

maintaining some suspension functions of a vehicle suspension system available when some height sensors of the suspension system fail;

the height sensors being configured to detect a height of a vehicle body.

According to a third aspect of the present disclosure, an embodiment of a vehicle is provided, including the vehicle suspension system according to the first aspect or a vehicle control apparatus according to the third aspect.

Optionally, an embodiment of the vehicle control apparatus is further provided. The apparatus includes a memory and a processor. The memory stores executable instructions, and the instructions are used to control the processor to perform an operation to perform the vehicle control method according to the second aspect. A beneficial effect of the embodiments of the present disclosure is that the vehicle suspension system according to the embodiments includes the plurality of height sensors. The height sensors are configured to detect the height of the vehicle body, and the system is configured to maintain some suspension functions of the vehicle suspension system available when some of the plurality of height sensors fail. According to the vehicle suspension system provided in the embodiments, some functions of the vehicle suspension system are maintained available when the height sensor fails, which avoids a safety risk caused by loss of all suspension functions due to failure of a single height sensor in the related technology, thereby improving driving safety of a driver.

Other features and advantages of the present disclosure will become clear from the following detailed description of the exemplary embodiments of the present disclosure with reference to the accompanying drawings.

**BRIEF DESCRIPTION OF DRAWINGS**

The accompanying drawings which are incorporated in the specification and constitute a part of the specification illustrate embodiments of the present disclosure, and are used to explain the principles of the present disclosure together with the descriptions of the embodiments.

FIG. 1a is a schematic diagram of a composition structure of a vehicle suspension system according to some embodiments;

FIG. 1b is a schematic diagram of a composition structure of a vehicle suspension system according to some other embodiments;

FIG. 2 is a first schematic structural diagram of a vehicle according to some embodiments;

FIG. 3 is a schematic diagram of a test principle of a height sensor of a vehicle according to some embodiments;
FIG. 4 is a schematic diagram of calculating a height difference of a failed height sensor according to some embodiments;
FIG. 5 is a second schematic structural diagram of a vehicle according to some embodiments;
FIG. 6 is a flowchart of a vehicle control method according to some embodiments;
FIG. 7 is a flowchart of a vehicle control method according to some other embodiments;
FIG. 8 is a schematic structural diagram of a vehicle control apparatus according to some embodiments;
FIG. 9 is a schematic structural diagram of a vehicle according to some embodiments; and
FIG. 10 is a schematic structural diagram of a vehicle according to some other embodiments.

## DESCRIPTION OF EMBODIMENTS

Various exemplary embodiments of the present disclosure are described now in detail with reference to the accompanying drawings. It should be noted that unless otherwise specifically specified, the relative arrangements, numeric expressions, and values of the components and steps described in these embodiments do not limit the scope of the present disclosure.

The following descriptions of at least one exemplary embodiment are merely illustrative, and should not be construed as any limitation on the present disclosure and implementation or use thereof.

Techniques, methods and devices known to a person of ordinary skill in the relevant art may not be discussed in detail. However, where appropriate, the techniques, methods and devices should be considered as a part of the specification.

In all the examples shown and discussed herein, any specific value should be construed as merely an example and not as a limitation. Therefore, other examples of exemplary embodiments may have different values.

It should be noted that similar reference numerals and letters represent similar items in the following accompanying drawings. Therefore, once a specific item is defined in one of the accompanying drawings, no further discussion thereof is required in the subsequent accompanying drawings.

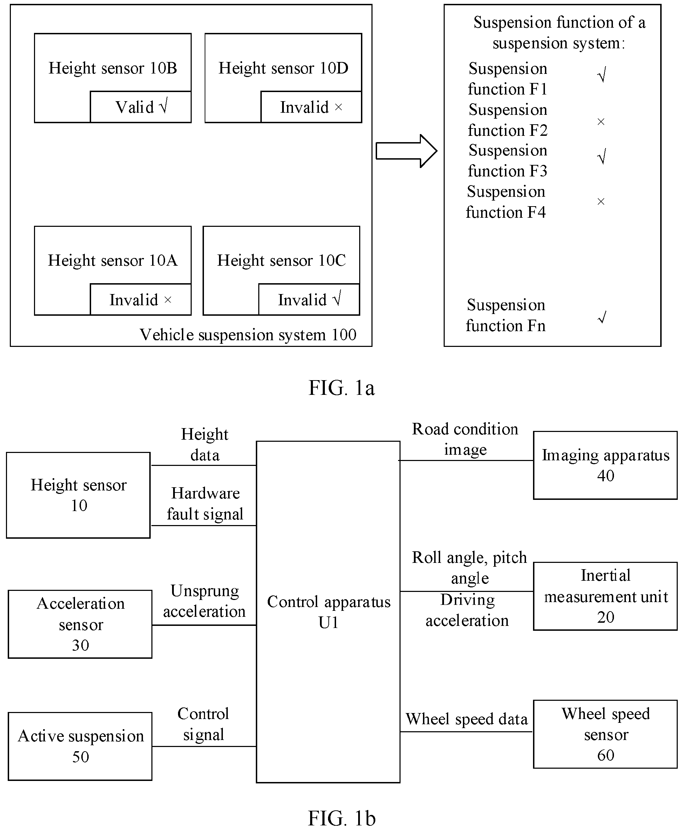

The embodiments of the present disclosure relate to a processing solution for a vehicle suspension system whose height sensor is in a failed state. FIG. 1a shows a schematic structural diagram of a vehicle suspension system according to some embodiments. As shown in FIG. 1a, a vehicle suspension system 100 in this embodiment of this application includes a plurality of height sensors. For example, a left front height sensor 10A, a right front height sensor 10B, a left rear height sensor 10C, and a right rear height sensor 10D are disposed.

The vehicle suspension system 100 further includes an active suspension, and the active suspension is connected between a vehicle body and a wheel of a vehicle. The suspension system 100 may adjust a height, an attitude, and the like of the vehicle body based on height data detected by the height sensor.

FIG. 1b shows a vehicle suspension system according to some other embodiments. As shown in FIG. 1b, the vehicle suspension system 100 includes a height sensor 10 and an active suspension 50. FIG. 1b only schematically shows one height sensor 10 and one suspension 50, and is not intended to limit quantities of height sensors and suspensions. As shown in FIG. 1b, the vehicle suspension system 100 may further include a control apparatus U1. The control apparatus U1 is connected to each height sensor 10, receives height data output by the height sensor, and controls an action of the active suspension 50 based on the height data. For example, when the active suspension is a hydraulic suspension, this may involve controlling a power member such as a pump of the active suspension and various valves on a hydraulic pipeline.

In addition, as shown in FIG. 1b, the vehicle suspension system may further include various sensors to detect a state of the vehicle, and provide data support for the control apparatus U1 to perform processing for height sensor failure. FIG. 1b shows, without limitation, several sensors, including an imaging apparatus 40, a wheel speed sensor 60, an inertial measurement unit (Inertial Measurement Unit, IMU) 20, an acceleration sensor 30, and the like. In another embodiment, only some of the sensors, such as the inertial measurement unit 20, may be disposed in the vehicle suspension system. This is not limited herein.

In FIG. 1b, the imaging apparatus 40 may be configured to collect a road surface image, so as to determine, based on the road surface image, a state of a road surface such as an inclination of a road surface on which the vehicle travels, and an inclination of a road surface ahead on which the vehicle travels. The inertial measurement unit 20 may provide acceleration data such as acceleration of the vehicle in a traveling direction, and angle data such as a pitch angle and a roll angle of the vehicle body. The wheel speed sensor 60 may be configured to provide the control apparatus U1 with wheel speed data. The acceleration sensor 30 is configured to provide the control apparatus U1 with acceleration data that reflects action acceleration of the suspension.

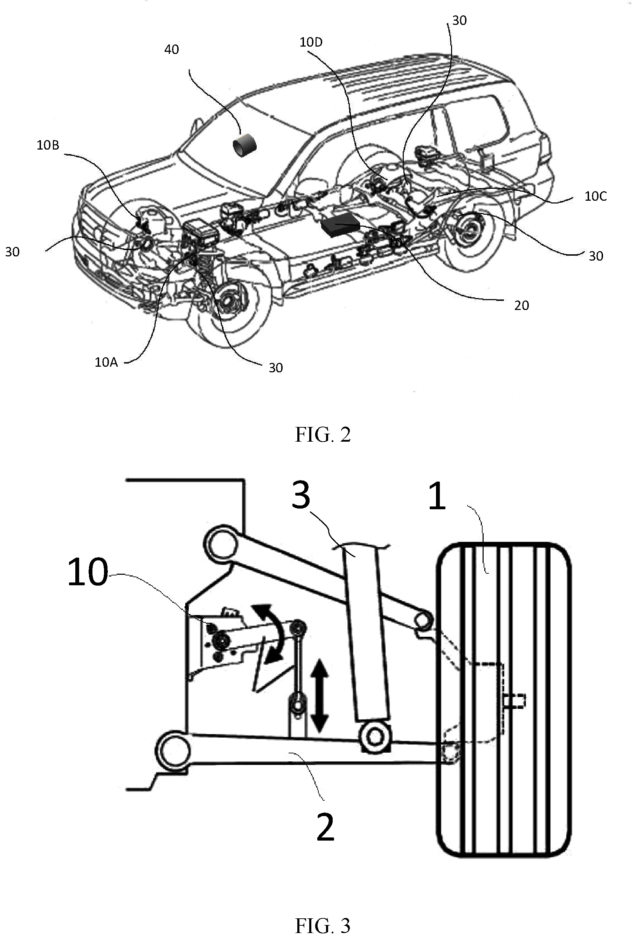

A vehicle as shown in FIG. 2 is provided with the vehicle suspension system 100 shown in FIG. 1a or FIG. 1b. The vehicle has four tires, that is, a front left tire, a front right tire, a rear left tire, and a rear right tire. The suspension system 100 includes an active suspension disposed at each of the four tires, and the active suspension may be a double-wishbone active suspension. One end of the active suspension is connected to a swing arm of a wheel corresponding to the active suspension, and the other end is connected to a vehicle body action point corresponding to the active suspension.

In an embodiment in which four independent suspensions are disposed in the vehicle, the four height sensors 10A, 10B, 10C, and 10D are disposed corresponding to four active suspensions. The left front height sensor 10A corresponds to a left front suspension of the vehicle, the right front height sensor 10B corresponds to a right front suspension of the vehicle, the left rear height sensor 10C corresponds to a left rear suspension of the vehicle, and the right rear height sensor 10D corresponds to a right rear suspension of the vehicle. In other words, a plurality of suspensions of the suspension system are disposed in a one-to-one correspondence with the plurality of height sensors. Each of the height sensors is configured to detect a height between a vehicle body action point corresponding to the height sensor and a wheel corresponding to the height sensor.

FIG. 3 is a schematic structural diagram of an active suspension according to some embodiments. As shown in FIG. 3, in some embodiments, each active suspension includes a damper 3. A plurality of dampers are in a one-to-one correspondence with the plurality of height sensors 10. Different dampers correspond to different wheels, and a vehicle body action point corresponding to the height sensor 10 is a connection point between a damper corresponding to the height sensor 10 and the vehicle body.

In this embodiment, the damper 3 may be a hydraulic cylinder, an air spring, or the like. This is not limited herein. Different dampers correspond to different wheels. One end of the damper 3 is connected to a swing arm 2 of a wheel corresponding to the damper 3, and the other end of the damper 3 is connected to the vehicle body. The height sensors 10 are disposed in a one-to-one correspondence with the dampers 3. The height sensor 10 is configured to detect a height of the damper 3.

The active suspension may further include a spring. The spring and the damper may occupy different mounting spaces separately. The spring may be sleeved on the damper, so as to save the mounting space. The spring may alternatively be connected in series to the damper. One end of the spring is connected to the wheel, and the other end of the spring is connected to the damper. An output end of the damper is connected to the vehicle body. This is not limited herein. In an embodiment in which the active suspension includes the spring, the acceleration sensor in FIG. 1b may be disposed at the spring of the suspension to detect unsprung acceleration that reflects a spring deflection amount.

In some embodiments, the height sensors 10 may be angle sensors, which are disposed respectively at the left front, right front, left rear, and right rear dampers 3 of the vehicle. A bracket end of each of the height sensors 10 is connected and fastened to the vehicle body, and the other end is fastened to the swing arm 2 of a wheel 1 corresponding to the height sensor 10. When the damper 3 is pressurized to lift the vehicle body, the swing arm 2 drives the height sensor 10 to move, so as to change a swing angle of the height sensor 10. The height sensor 10 collects an angle value $\theta$ in this state, and further obtains a height value that is of the damper 3 and that corresponds to the angle value.

In some embodiments, after the height sensor 10 collects the angle value $\theta$, a preliminary height value $y_0$ may be obtained through DMU simulation calculation based on a design principle of the vehicle and dimensions of components of the active suspension and the height sensor, for example, may be obtained through calculation based on formula (1):

$$y_0 = k * \theta + b \quad (1),$$

where k and b are constant values determined for DMU simulation based on factors such as dimensions of components of a double-wishbone arm of the active suspension and the height sensor.

After the preliminary height value $y_0$ is obtained, a final height value y corresponding to the angle value is obtained through calibration by diagnostic software.

In some embodiments, an angle limit range of the corresponding height sensor may be determined based on a height limit range of the damper 3.

In some embodiments, when the height sensor experiences one of two cases where hardware fails or an output value exceeds a limit range, the height sensor fails.

In this embodiment, height sensor failure includes two failure manners. First, the height sensor experiences a hardware failure. When there is a hardware failure in the four height sensors, for example, a circuit diagnosis fault such as open circuit, short circuit, or voltage abnormality, the height sensor with the hardware failure cannot collect the angle value $\theta$. In this case, a height sensor corresponding to the missing angle value $\theta$ fails. Second, the output value of the height sensor exceeds the limit range. Even if angle values $\theta$ output by the four height sensors are not missing, an angle value of the four angle values $\theta$ may exceed the limit range due to some reasons such as an improper collision. In this case, a height sensor corresponding to the angle value $\theta$ that exceeds the limit range fails.

It should be noted that, the foregoing two failure manners of the height sensor each can determine a quantity of failed height sensors and a position of the height sensor in the vehicle body. For example, when the height sensor at the left front wheel does not output an angle value or the output value exceeds the limit range, it is determined that the height sensor at the left front wheel fails.

In some other embodiments, when duration in which the height sensor experiences one of the two cases where the hardware fails or the output value exceeds the limit range reaches first duration, the height sensor fails.

In this embodiment, the control apparatus of the vehicle suspension system may record failure maintenance duration when the height sensor experiences one of the two cases where the hardware fails or the output value exceeds the limit range. When the failure maintenance duration reaches the first duration, it is determined that the height sensor fails, to improve accuracy of failure determining.

In some embodiments, the vehicle suspension system may be configured to maintain some suspension functions of the vehicle suspension system available when some of the plurality of height sensors fail.

For example, when it is determined that some height sensors fail, the control apparatus of the suspension system sets a corresponding suspension function level, so as to maintain some suspension functions of the vehicle suspension system available. The suspension function level indicates an available suspension function corresponding to a current failure type. For different suspension function levels, at least one of types and a quantity of available suspension functions is different.

In some embodiments, the suspension function of the suspension system may include the following types: a damping control function, a stiffness control function, a height adjustment function, and a height adjustment suppression function.

The damping control function is a function for adjusting a damping force of a suspension. The damping control function may include at least one of roll damping control, pitch damping control, vertical damping control, or speed-dependent damping control.

The stiffness control function is a function for adjusting stiffness of the suspension. The stiffness control function may include at least one of roll stiffness control, pitch stiffness control, or vertical stiffness control.

The height adjustment function is a function for adjusting a height of the vehicle body by using the suspension. The height adjustment function may include at least one of a voice-controlled height adjustment function, a manual height adjustment function, a speed-dependent height adjustment function, a camping leveling function, an ultra-high escape function, a welcome function, an access function, a load balancing function, or a height return function. The voice-controlled height adjustment function enables a driver to control height adjustment by using voice. The manual height adjustment function enables the driver to manually control height adjustment. The speed-dependent height adjustment function is used to adjust the height of the vehicle body based on a vehicle speed. A higher vehicle speed indicates a lower height of the vehicle body to be set; and a lower vehicle speed indicates a higher height of the vehicle body to be set. The camping leveling function is a function for leveling an attitude of the vehicle body when the vehicle is on an uneven road surface. The ultra-high escape function is a function for raising the height of the vehicle body to a maximum level. The welcome function is a function for lowering the height of the vehicle body so that an occupant can enter the vehicle. The access function is used to lower the height of the vehicle body to facilitate retrieving an item from a trunk. The load balancing function enables leveling of a tilted attitude of the vehicle body due to load changes when the vehicle is in a stationary state. The height return function enables leveling of the attitude of the vehicle body when the vehicle is in a driving state.

The height adjustment suppression function is a function capable of suppressing height adjustment, and the height adjustment suppression function may include at least one of a manual height adjustment suppression function, an automatic height adjustment suppression function, a suppression function of stopping height adjustment during a collision, or a suppression function of stopping height adjustment during maintenance. The manual height adjustment suppression function enables suppression of all height adjustment functions through manual triggering. For example, all height adjustment functions are suppressed by manually pressing an "off" button for height adjustment. The automatic height adjustment suppression function enables suppression of all height adjustment functions when a specified condition is met. For example, when a depth of a brake pedal exceeds a depth threshold, or a depth of an accelerator pedal exceeds the depth threshold, all height adjustment functions are suppressed. The suppression function of stopping height adjustment during a collision enables suppression of all height adjustment functions during a collision. The suppression function of stopping height adjustment during maintenance enables suppression of all height adjustment functions when the vehicle is in a maintenance state.

In some embodiments, when some height sensors fail, types of available suspension functions of the vehicle suspension system vary based on a quantity of failed height sensors.

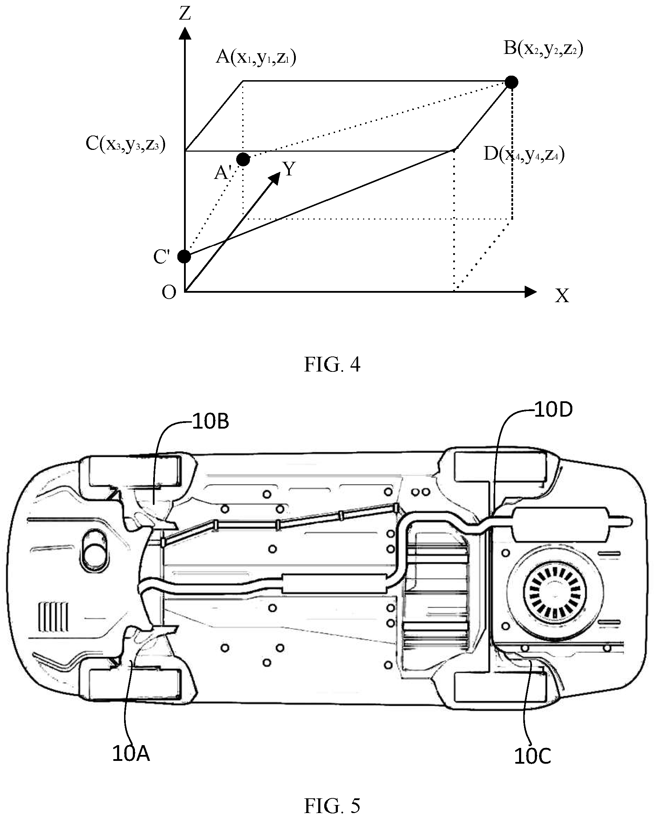

Correspondingly, when some of the plurality of height sensors fail, the control apparatus of the vehicle suspension system may determine a corresponding suspension function level based on the quantity of failed height sensors. The corresponding suspension function level varies based on the quantity of failed height sensors. When the quantity of failed height sensors is 1, for example, the height sensor 10A in FIG. 5 fails, the corresponding suspension function level is 3. When the quantity of failed height sensors is 2, for example, the height sensor 10A and the height sensor 10C shown in FIG. 5 fail, or the height sensor 10A and the height sensor 10D fail, the corresponding suspension function level is 2. When the quantity of failed height sensors is 3, for example, the height sensor 10A, the height sensor 10B, and the height sensor 10C in FIG. 5 fail, the corresponding suspension function level is 1.

Types of available suspension functions that are of the suspension system and that correspond to different suspension function levels are different.

In some embodiments, when a single height sensor fails, the available suspension function includes some functions in the height adjustment function, as well as the height adjustment suppression function, the damping control function, and the stiffness control function; or when two height sensors fail, the available suspension function includes the height adjustment suppression function and the damping control function; or when three height sensors fail, the available suspension function includes the height adjustment suppression function.

In this embodiment, the corresponding suspension function level varies based on the quantity of failed height sensors. The types of available suspension functions that are of the suspension system and that correspond to the different suspension function levels are different.

A suspension function level corresponding to failure of a single height sensor is 3, and types of available suspension functions that are of the suspension system and that correspond to the suspension function level 3 include some functions in the height adjustment function, as well as the height adjustment suppression function, the damping control function, and the stiffness control function.

A suspension function level corresponding to failure of two height sensors is 2, and types of available suspension functions that are of the suspension system and that correspond to the suspension function level 2 include the height adjustment suppression function and the damping control function.

A suspension function level corresponding to failure of three height sensors 1, and types of available suspension functions that are of the suspension system and that correspond to the suspension function level 1 include the height adjustment suppression function.

A person skilled in the art should understand that a correspondence between the suspension function level and the type of the available suspension function in this embodiment is described as an example, and cannot be used as a limitation on this embodiment of this application.

In a further embodiment, when a single height sensor fails, an unavailable height adjustment function includes at least one of the load balancing function, the ultra-high escape function, the camping leveling function, or the voice-controlled height adjustment function.

In this embodiment, when the types of available suspension functions that are of the suspension system and that correspond to the suspension function level 3 include some functions in the height adjustment function, the unavailable height adjustment function in the height adjustment function may be a height adjustment function that is used at a low frequency. For example, the unavailable height adjustment function may be at least one of the load balancing function, the ultra-high escape function, the camping leveling function, or the voice-controlled height adjustment function. A person skilled in the art should understand that when the suspension function level is 3, a specific unavailable height adjustment function in the height adjustment function is not limited herein.

In some other embodiments, when some height sensors fail, a quantity of available suspension functions of the vehicle suspension system varies based on the quantity of failed height sensors.

Correspondingly, when some of the plurality of height sensors fail, the control apparatus of the vehicle suspension system may determine a corresponding suspension function level based on the quantity of failed height sensors. When a single height sensor fails, the corresponding suspension function level is 3; when two height sensors fail, the corresponding suspension function level is 2; and when three height sensors fail, the corresponding suspension function level is 1.

Quantities of available suspension functions that are of the suspension system and that correspond to different suspension function levels are different.

In some embodiments, the quantity of available suspension functions varies based on the quantity of failed height sensors. A greater quantity of failed height sensors indicates a smaller quantity of available suspension functions.

Correspondingly, the control apparatus of the vehicle suspension system may determine a corresponding suspension function level based on the quantity of failed height sensors. The suspension function level is used to reflect a proportion of available suspension functions relative to all suspension functions of the suspension system. A greater quantity of failed height sensors indicates a lower suspension function level, a smaller proportion of available suspension functions relative to all suspension functions of the suspension system, and fewer available suspension functions.

In some examples, a correspondence between the suspension function level and the proportion of available suspension functions of the suspension system is as follows:

Suspension function level 3: 75%-85% of suspension functions are available.
Suspension function level 2: 35%-50% of suspension functions are available.
Suspension function level 1: 10%-15% of suspension functions are available.

In still other embodiments, when some height sensors fail, the types and the quantity of available suspension functions of the vehicle suspension system vary based on the quantity of failed height sensors.

Correspondingly, the control apparatus of the vehicle suspension system may determine the suspension function level based on the quantity of failed height sensors. Suspension function levels corresponding to different quantities of failed height sensors are different, and quantities and types of available suspension functions corresponding to the different suspension function levels are different.

In some examples, the quantities and the types of suspension functions corresponding to the different suspension function levels are as follows:

When a single height sensor fails, the available suspension functions include: the manual height adjustment function, the speed-dependent height adjustment function, the welcome function, the access function, and the height return function that are in the height adjustment function; the manual height adjustment suppression function, the automatic height adjustment suppression function, the suppression function of stopping height adjustment during a collision, and the suppression function of stopping height adjustment during maintenance that are in the height adjustment suppression function; the pitch damping control, the roll damping control, the vertical damping control, and the speed-dependent damping control that are in the damping control function; and the pitch stiffness control, the roll stiffness control, and the vertical stiffness control that are in the stiffness control function.

When two height sensors fail, the available suspension functions include the pitch damping control, the roll damping control, the vertical damping control, and the speed-dependent damping control that are in the damping control function; and the manual height adjustment suppression function, the automatic height adjustment rotation suppression function, the suppression function of stopping height adjustment during a collision, and the suppression function of stopping height adjustment during maintenance that are in the height adjustment suppression function.

When three height sensors fail, the available suspension functions include: the manual height adjustment suppression function, the automatic height adjustment suppression function, the suppression function of stopping height adjustment during a collision, and the suppression function of stopping height adjustment during maintenance that are in the height adjustment suppression function.

According to this embodiment of this application, when some of the plurality of height sensors fail, some suspension functions of the vehicle suspension system are maintained available, so as to avoid a safety risk caused by loss of suspension functions due to failure of a single height sensor in the related technology, thereby improving driving safety of a driver.

In some embodiments, the vehicle suspension system further includes a plurality of dampers, and each of the dampers is disposed corresponding to each height sensor.

In this embodiment, as shown in FIG. 3, the damper 3 is disposed corresponding to the height sensor, and the height sensor is configured to detect the height of the damper 3. An action principle of detecting the height of the damper 3 by the height sensor is described above. To avoid repetition, details are not described herein.

In some embodiments, the vehicle suspension system may be configured to: when some height sensors fail, adjust a height of a damper corresponding to a failed height sensor based on a height of a damper corresponding to a valid height sensor, to adjust each of a pitch angle and a roll angle of the vehicle body to be within a corresponding angle range.

In this embodiment, for example, the action may be performed by the control apparatus of the suspension system.

In some embodiments, adjustment of the height of the damper corresponding to the failed height sensor based on the height of the damper corresponding to the valid height sensor includes step S1100 and step S1200.

Step S1100: Obtain, based on a height value that is of a damper and that is detected by the valid height sensor and attitude data that reflects an attitude of the vehicle body, a height difference between the height of the damper corresponding to the failed height sensor and a target height.

In this embodiment, as shown in FIG. 2, the inertial measurement unit 20 (Inertial Measurement Unit, IMU) is disposed at a centroid position of the vehicle. A space rectangular coordinate system is established by taking the centroid position of the vehicle as an origin O, a longitudinal direction of the vehicle body as an x axis, a lateral direction of the vehicle body as a y axis, and a vertical direction of the vehicle body as a z axis. A six-axis attitude (IMU_Ax, IMU_Ay, IMU_Az, IMU_pitch, IMU_roll, IMU_yaw) of the IMU in a current state of the vehicle may be obtained by using the IMU. IMU_Ax is acceleration in an x-axis direction, IMU_Ay is acceleration in a y-axis direction, and IMU_Az is acceleration in a z-axis direction. IMU_pitch is a pitch angle, IMU_roll is a roll angle, and IMU_yaw is a yaw angle.

The attitude data that reflects the attitude of the vehicle body is determined based on the pitch angle IMU_pitch, the roll angle IMU_roll, and the yaw angle IMU_yaw in the IMU six-axis attitude data. A three-axis full rotation matrix $M_{ZYX}$ may be determined based on the attitude data, and the height difference between the height of the damper corresponding to the failed height sensor and the target height may be obtained based on the three-axis full rotation matrix and the target height. The target height may be the height value that is of the damper and that is detected by the valid height sensor.

In a series of embodiments, when a single height sensor fails, the target height may be a height value that is of the damper and that is detected by any one of the other three valid height sensors, or may be an average value of height values that are of dampers and that are detected by the other three valid height sensors. This is not limited herein.

The three-axis full rotation matrix $M_{ZYX}$ may be obtained through calculation based on the following formula:

$$M_{ZYX} = \begin{bmatrix} cos(Head)cos(Roll) & sin(Pitch)sin(Head)cos(Roll) - cos(Pritch)sin(Roll) & sin(Head)cos(Pritch)cos(Roll) + sin(Pritch)sin(Roll) \\ cos(Head)sin(Roll) & sin(Pitch)sin(Head)sin(Roll) + cos(Pritch)cos(Roll) & sin(Head)sin(Roll)cos(Pritch) - sin(Pritch)cos(Roll) \\ -sin(Head) & sin(Pritch)cos(Head) & cos(Pritch)cos(Head) \end{bmatrix}$$

The following uses an example in which two height sensors fail to describe in detail a process of calculating the height difference between the height of the damper corresponding to the failed height sensor and the target height.

When two height sensors fail, as shown in FIG. 4, height sensors at a point A and a point C fail. Height data detected by a height sensor in a valid state is position coordinates B $(x_2, y_2, z_2)$ corresponding to a point B and position coordinates $D(x_4, y_4, z_4)$ corresponding to a point D. Position coordinates A $(x_1, y_1, z_1)$, $(Cx_3, y_3, z_3)$ (that is, the target height) may be determined based on the position coordinates of the point B or the position coordinates of the point D. Then, the three-axis full rotation matrix $M_{ZYX}$ is determined based on IMU attitude data, and position coordinates of a point A' and a point C' are obtained by using $M_{ZYX}$ to perform coordinate transformation on the point A and the point C, so as to determine the height difference between the height of the damper corresponding to the failed height sensor and the target height.

Step S1200: Control, based on the height difference, an action of an active suspension corresponding to the failed height sensor to adjust the height of the damper corresponding to the failed height sensor.

After the height of the damper corresponding to the failed height sensor is adjusted, it is determined whether each of the pitch angle IMU_pitch and the roll angle IMU_roll that is determined by using the IMU six-axis attitude data is within a corresponding angle range.

After the attitude of the vehicle body is adjusted, a corresponding step is performed based on whether each of a current pitch angle and a current roll angle of the vehicle body is within the corresponding angle range. If each of the pitch angle and the roll angle of the vehicle body is within the corresponding angle range, a corresponding failure control mode is determined. For example, a failure control mode corresponding to the failure of a single height sensor is 1, a failure control mode corresponding to the failure of two height sensors is 2, and a failure control mode corresponding to the failure of three height sensors is 3.

If either the pitch angle or the roll angle of the vehicle body is not within the corresponding angle range, step S2100 and step S2200 are performed.

Step S2100: The vehicle suspension system may be configured to update, based on the height value that is of the damper and that is detected by the valid height sensor and the attitude data that reflects the attitude of the vehicle body, the height difference when either the pitch angle or the roll angle of the vehicle body is not within the corresponding angle range.

In this embodiment, after the action of the active suspension is controlled to adjust the attitude of the vehicle body of the vehicle, the attitude data that reflects the attitude of the vehicle body is obtained, and it is determined whether a current attitude of the vehicle body is tilted. When either the pitch angle or the roll angle in the attitude data that reflects the attitude of the vehicle body is not within the corresponding angle range, it indicates that the attitude of the vehicle body remains tilted after being leveled. In this case, the height difference between the height of the damper corresponding to the failed height sensor and the target height is updated based on the height value that is of the damper and that is detected by the valid height sensor and the attitude data that reflects the attitude of the vehicle body. A method for updating the height difference herein is the same as the method described in the foregoing step S1100, with a difference being the attitude data reflecting the attitude of the vehicle body. Details are not described herein again.

Step S2200: Control, based on an updated height difference and a set compensation amount, the action of the active suspension corresponding to the failed height sensor to adjust the attitude of the vehicle body, where the compensation amount is related to an inclination angle of the vehicle body.

In this embodiment, the compensation amount is an amount related to the pitch angle and the roll angle of the vehicle body. For example, after the action of the active suspension is controlled to adjust the attitude of the vehicle body, each of the pitch angle and the roll angle still significantly deviates from the corresponding angle range. In this case, a compensation amount corresponding to a current pitch angle and a current roll angle is determined based on the current pitch angle and the current roll angle, and a quantity of updates is recorded. After the compensation amount is determined, the updated height difference and the set compensation amount are used as a measured height difference. The action of the active suspension corresponding to the failed height sensor is controlled, based on the measured height difference, to adjust the attitude of the vehicle body of the vehicle.

According to this embodiment of this application, when either the pitch angle or the roll angle of the vehicle body is not within the corresponding angle range, the height difference is updated based on the height value that is of the damper and that is detected by the valid height sensor and the attitude data that reflects the attitude of the vehicle body. The action of the active suspension corresponding to the failed height sensor is controlled, based on the updated height difference and the set compensation amount, to adjust the attitude of the vehicle body of the vehicle. This enables automated control of the attitude of the vehicle body, thereby ensuring driving safety.

In some embodiments, when the quantity of updates of the height difference is greater than or equal to a first quantity threshold, the vehicle suspension system may be configured to increase, by a set step distance, the angle range corresponding to each of the pitch angle and the roll angle.

In this embodiment, the action may be specifically performed by the control apparatus of the vehicle suspension system. To improve efficiency of adjusting the attitude of the vehicle body, the first quantity threshold is preset. For example, the first quantity threshold is preset to 5.

When the quantity of updates of the height difference is less than the first quantity threshold, it is determined, based on whether each of the pitch angle and the roll angle is within the corresponding angle range, whether the attitude of the vehicle body is leveled. When the quantity of updates of the height difference is greater than or equal to the first quantity threshold, the angle range corresponding to each of the pitch angle and the roll angle is increased by the set step distance, so that an increased angle range is used to determine whether the attitude of the vehicle body is leveled, thereby improving efficiency of leveling the attitude of the vehicle body.

In some embodiments, the vehicle suspension system may be configured to stop adjustment of the attitude of the vehicle body when the quantity of updates of the height difference is greater than a second quantity threshold.

In this embodiment, the action may be specifically performed by the control apparatus of the vehicle suspension system. A threshold of a quantity of adjustments of the attitude of the vehicle body, that is, the second quantity threshold, is preset. For example, the second quantity threshold is preset to 10.

When the quantity of updates of the height difference is greater than the second quantity threshold, it indicates that when the quantity of adjustments of the vehicle body is less than or equal to the second quantity threshold, either the pitch angle or the roll angle of the vehicle body is not within the corresponding angle range. In other words, the vehicle body cannot be leveled. In this case, adjustment of the attitude of the vehicle body is stopped. Otherwise, it indicates that the vehicle body can be leveled.

In some embodiments, the vehicle suspension system may be configured such that, when some height sensors fail and the vehicle body can be leveled, at least one of the types and the quantity of available suspension functions is different and is determined based on the quantity of failed height sensors. That the vehicle body can be leveled means that each of the pitch angle and the roll angle of the vehicle body can be adjusted to be within the corresponding angle range.

In this embodiment, for example, the action may be performed by the control apparatus of the vehicle suspension system. After adjusting the attitude of the vehicle body, the control apparatus of the vehicle suspension system determines a corresponding failure control mode. After the suspension function level is determined based on the quantity of failed height sensors, if the quantity of adjustments of the attitude of the vehicle body is less than or equal to the second quantity threshold, each of the pitch angle and the roll angle of the vehicle body can be adjusted to be within the corresponding angle range, and it indicates that the vehicle body can be leveled. In other words, the failed height sensor has little impact on leveling of the attitude of the vehicle body. In this case, a suspension function level in the determined failure control mode corresponds to the quantity of failed height sensors. In other words, the suspension function level in the failure control mode is the same as the suspension function level determined based on the quantity of failed height sensors.

For example, when a single height sensor fails, the corresponding suspension function level is 3. If the vehicle body can be leveled, a failure control mode 1 is determined, and a suspension function level in the failure control mode 1 is 3. When two height sensors fail, the corresponding suspension function level is 2. If the vehicle body can be leveled, a failure control mode 2 is determined, and a suspension function level in the failure control mode 2 is 2. When three height sensors fail, the corresponding suspension function level is 1. If the vehicle body can be leveled, a failure control mode 3 is determined, and a suspension function level in the failure control mode 3 is 1.

In some embodiments, when the quantity of failed height sensors is different, at least one of the types and the quantity of available suspension functions of the vehicle suspension system is different.

In this embodiment, the suspension function levels corresponding to different quantities of failed height sensors are different, and the quantities and the types of available suspension functions corresponding to the different suspension function levels are different. Details are described above, and are not described herein again.

In some other embodiments, the vehicle suspension system may be configured such that, when some height sensors fail and the vehicle body cannot be leveled, the type of the available suspension function is different from the type of the available suspension function when the vehicle body can be leveled. That the vehicle body cannot be leveled means that either the pitch angle or the roll angle of the vehicle body cannot be adjusted to be within the corresponding angle range.

For example, when some height sensors fail and the vehicle body cannot be leveled, the quantity of available suspension functions is less than the quantity of available suspension functions when the vehicle body can be leveled.

In this embodiment, the action may be specifically performed by the control apparatus of the vehicle suspension system. The control apparatus of the vehicle suspension system lowers the suspension function level when some height sensors fail and the vehicle body cannot be leveled. In a process of adjusting the attitude of the vehicle body, if the quantity of updates of the height difference is greater than the second quantity threshold, it indicates that when the quantity of updates of the height difference is less than or equal to the second quantity threshold, either the pitch angle or the roll angle of the vehicle body is not within the corresponding angle range. In this case, the vehicle body cannot be leveled, and the failed height sensor has a great impact on the attitude of the vehicle body, which poses a great safety risk. In this case, the suspension function level is lowered.

Continuing the foregoing example, when a single height sensor fails, the corresponding suspension function level is 3. If the vehicle body cannot be leveled, the failure control mode 2 is determined, and the corresponding suspension function level is 2. When two height sensors fail, the corresponding suspension function level is 2. If the vehicle body cannot be leveled, the failure control mode 3 is determined, and the suspension function level corresponding to the failure control mode 3 is 1. When three height sensors fail, the corresponding suspension function level is 1. If the vehicle body cannot be leveled, a failure control mode 4 is determined, and a suspension function level corresponding to the failure control mode 4 is 0. In this case, all available suspension functions of the suspension system are disabled.

In some embodiments, when the quantity of failed height sensors is different, the suspension function levels are different, and the types and/or the quantity of available suspension functions of the vehicle suspension system are different. The correspondence therein is described in detail above. To avoid repetition, details are not described herein.

In some embodiments, the vehicle suspension system may be configured to: after a specific control mode is determined, perform the available suspension function by calculating the height value of the damper corresponding to the failed height sensor. For a calculation manner, refer to the description with reference to FIG. 4. Details are not described herein again.

In some embodiments, the action may be specifically performed by the control apparatus of the vehicle suspension system. When some height sensors fail, driving state information of the vehicle is obtained. The driving state information includes at least one of driving speed information, driving acceleration information, or road surface inclination information. When the driving state information matches a failure processing condition corresponding to a current failure type, a step of adjusting, based on the height of the damper corresponding to the valid height sensor, the height of the damper corresponding to the failed height sensor is performed. The current failure type is related to the quantity of failed height sensors of the vehicle.

In this embodiment, when some height sensors fail, the driving state information of the vehicle is obtained, to determine whether the vehicle meets the failure processing condition.

In some embodiments, the acceleration information may be the IMU_Ax in the IMU six-axis attitude data, or an unsprung acceleration value and an acceleration value of the IMU_Ax are obtained by using four unsprung acceleration sensors 30, to determine the driving acceleration information of the vehicle.

The speed information is determined by using a speedometer of a wheel. As shown in FIG. 2, the road surface inclination information may be determined based on a road surface image obtained by mounting the imaging apparatus 40 at a forward-facing position of the vehicle body. A person skilled in the art should understand that this is merely an example of obtaining the driving state information, and cannot be used as a limitation on this embodiment of this application.

After the driving state information is obtained, the driving state information is compared with the failure processing condition corresponding to the current failure type. The current failure type is related to the quantity of failed height sensors of the vehicle. When the quantity of failed height sensors is 1, the current failure type is the failure of a single height sensor. When the quantity of failed height sensors is 2, the current failure type is the failure of two height sensors. When the quantity of failed height sensors is 3, the current failure type is the failure of three height sensors.

In some embodiments, when a failed height sensor in a failed state is determined, a position of the failed height sensor in the vehicle body is determined. Therefore, the current failure type may alternatively be determined based on the quantity of failed height sensors and the position of the failed height sensor in the vehicle body.

When the quantity of failed height sensors is 1, a failure type is the failure of a single height sensor. When the quantity of failed height sensors is 2, and the two failed height sensors are located diagonally opposite, the failure type is failure of two diagonally opposed height sensors. When the quantity of failed height sensors is 2, and the two failed height sensors are located on a same side, the failure type is failure of two height sensors located on the same side. When the quantity of failed height sensors is 3, the failure type is the failure of three height sensors.

A failure processing condition corresponding to the failure type includes at least one of a driving speed limit, a driving acceleration limit, or a road surface inclination threshold.

For example, a failure processing condition corresponding to the failure of a single sensor: the road surface inclination threshold, and $0 < A_x < a_l$ && vehicle speed $0kpm < V_0 < 65kpm$. A failure processing condition corresponding to the failure of two diagonally opposed height sensors: $0 < A_x < a_l$ && vehicle speed $0kpm < V_0 < 50kpm$. A failure processing condition corresponding to the failure of two height sensors located on the same side: $0 < A_x < a_l$ && vehicle speed $0pm < V_0 < 30kpm$. A failure processing condition corresponding to the failure of three height sensors: $0 = A_x$ && vehicle speed $V_0 = 0kpm$.

When the quantity of failed height sensors is 3, a corresponding failure type is the failure of three height sensors. If the driving acceleration equals 0 and the driving speed $V_0$ is 0, it is determined that the driving state information matches the failure processing condition corresponding to the failure type, and the step of adjusting, based on the height of the damper corresponding to the valid height sensor, the height of the damper corresponding to the failed height sensor is performed.

According to this embodiment of this application, when some height sensors fail, the driving state information of the vehicle is obtained. When the driving state information matches the failure processing condition corresponding to the current failure type, the step of adjusting, based on the height of the damper corresponding to the valid height sensor, the height of the damper corresponding to the failed height sensor is performed. In this case, accuracy of adjusting the attitude of the vehicle body can be further improved when the driving safety is ensured.

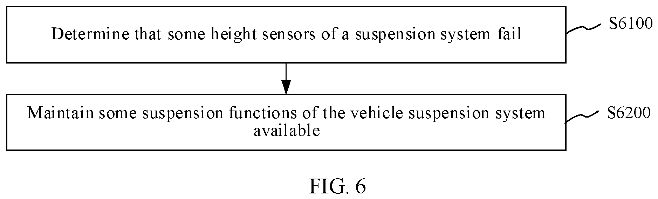

Based on the vehicle suspension system in the embodiments of the present disclosure, the present disclosure further provides an embodiment of a vehicle control method. FIG. 6 shows a vehicle control method according to some embodiments. The vehicle control method may be implemented by a control apparatus of a suspension system. As shown in FIG. 6, the vehicle control method may include the following step S6100 and step S6200:

Step S6100: Determine that some height sensors of a suspension system fail.

In step S6100, for each height sensor of the suspension system, it may be determined, based on whether the height sensor experiences one of two cases where hardware fails or an output value exceeds a limit range, whether the height sensor fails.

Step S6200: Maintain some suspension functions of the vehicle suspension system available when some height sensors of the suspension system fail, where the height sensors are configured to detect a height of a vehicle body.

In other words, when some height sensors fail, an available suspension function of the vehicle suspension system is determined, that is, a suspension function level of the vehicle suspension system is determined, so as to maintain some suspension functions of the vehicle suspension system available.

In an example in which four height sensors are disposed in the suspension system, when one, two, or three height sensors in the suspension system fail, some suspension functions may be maintained available.

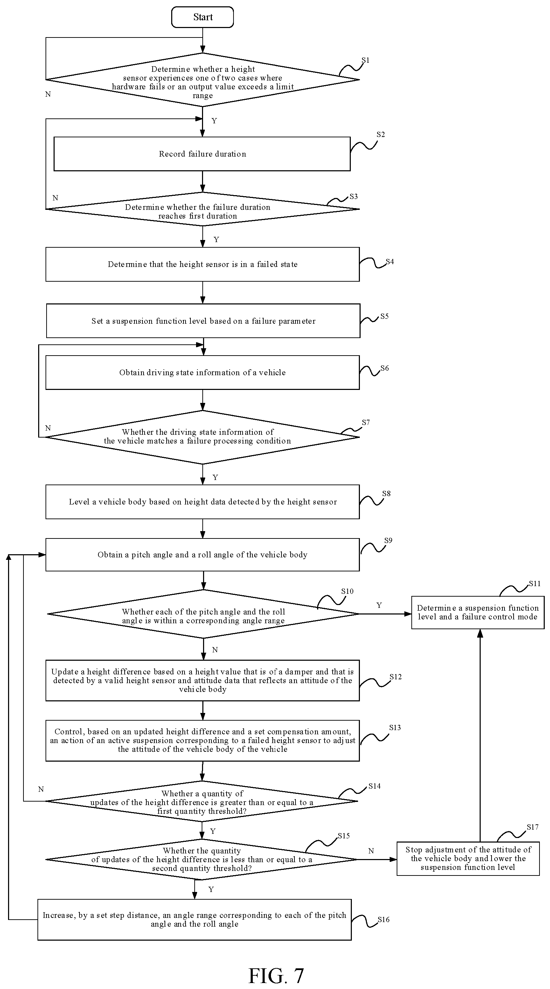

FIG. 7 shows a vehicle control method according to some other embodiments. The control method may also be implemented by the control apparatus of the suspension system. As shown in FIG. 7, the vehicle control method may include step S1 to step S17.

Step S1: For each height sensor, determine whether the height sensor experiences one of two cases where hardware fails or an output value exceeds a limit range, and if yes, perform step S2; if no, continue performing step S1 to monitor a state of the height sensor.

In another embodiment, if the height sensor does not experience the cases where the hardware fails or the output value exceeds the limit range, detection may be further performed on whether another failure condition exists on the height sensor, which is not limited herein.

Step S2: Record failure duration.

Step S3: Determine whether the failure duration reaches first duration, and if yes, perform step S4; if no, perform step S2.

Step S4: Determine that the height sensor is in a failed state.

Step S5: Set a suspension function level based on a quantity of failed height sensors.

In this embodiment, different suspension function levels correspond to differences in types and/or a quantity of available suspension functions. In some examples, a greater quantity of failed height sensors indicates a lower suspension function level and a smaller quantity of available suspension functions.

For example, when a single height sensor fails, the available suspension function includes some functions in a height adjustment function, as well as a height adjustment suppression function, a damping control function, and a stiffness control function.

In some examples, when a single height sensor fails, an unavailable height adjustment function includes at least one of a load balancing function, an ultra-high escape function, a camping leveling function, or a voice-controlled height adjustment function.

For another example, when two height sensors fail, the available suspension function includes the height adjustment suppression function and the damping control function.

For another example, when three height sensors fail, the available suspension function includes the height adjustment suppression function.

When all height sensors fail, all suspension functions may be disabled to ensure safety.

Step S6: Obtain driving state information of a vehicle.

Step S7: Whether the driving state information matches a failure processing condition corresponding to a current failure type, and if yes, perform step S8; if no, perform step S6.

Step S8: Adjust, based on a height of a damper corresponding valid height sensor, a height of a damper corresponding to the failed height sensor. After step S8 is performed, step S9 is performed.

Step S9: Obtain a current pitch angle and a current roll angle of a vehicle body, to perform step S10.

Step S10: Determine whether each of the pitch angle and the roll angle of the vehicle body is within a corresponding angle range. If yes, step S11 is performed. If no, that is, either the pitch angle or the roll angle of the vehicle body is not within the corresponding angle range, step S12 is performed.

Step S11: Determine a failure control mode and a suspension function level.

In this embodiment, the failure control mode is determined by a height sensor failure parameter. When the pitch angle and the roll angle can be adjusted to be within a first angle range, a determined suspension function level is an initial suspension function level set in step S6.

After the failure control mode and the suspension function level are determined, the available suspension function may be performed based on the failure control mode, such as a control mode corresponding to failure of a left front height sensor.

Step S12: Update a height difference based on a height value that is of a damper and that is detected by the valid height sensor and attitude data that reflects an attitude of the vehicle body.

Step S13: Control, based on an updated height difference and a set compensation amount, an action of an active suspension corresponding to the failed height sensor to adjust the attitude of the vehicle body of the vehicle.

When step S12 and step S13 are performed, a quantity of updates of the height difference is recorded, and step S14 and step S15 are performed to determine the quantity of updates of the height difference.

Step S14: Determine whether a quantity of updates of the height difference is greater than or equal to a first quantity threshold. If yes, step S15 is performed. Otherwise, step S9 is performed.

Step S15: Determine whether the quantity of updates of the height difference is less than or equal to a second quantity threshold. If yes, step S17 is performed; if no, step S16 is performed.

Step S16: Increase, by a set step distance, an angle range corresponding to each of the pitch angle and the roll angle, and then perform step S9.

In this embodiment, the angle range corresponding to each of the pitch angle and the roll angle is increased by the set step distance, which is used for the determining in step S10.

Step S17: Stop adjustment of the attitude of the vehicle body and lower the suspension function level.

After step S17, step S11 may be performed to determine a current failure control mode and a suspension function level, where a determined suspension function level is a lowered suspension function level.

According to this embodiment of this application, when some of the plurality of height sensors fail, some functions of the suspension system are maintained available, so as to avoid a safety risk caused by loss of suspension functions due to failure of a single height sensor in the related technology, thereby improving driving safety of a driver.

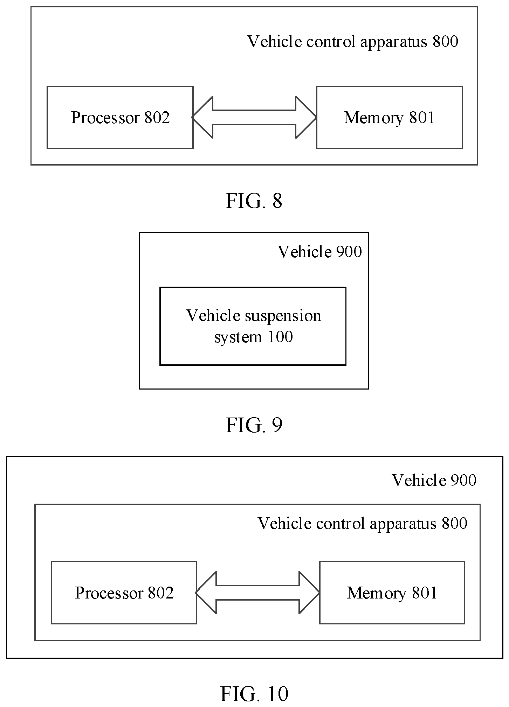

In some embodiments, as shown in FIG. 8, a vehicle control apparatus 800 is further provided. The apparatus 800 includes a memory 801 and a processor 802. The memory 801 is configured to store executable instructions, and the instructions are used to control the processor 802 to perform an operation to perform the vehicle control method according to this embodiment of this application.

In some embodiments, a vehicle 900 is further provided. As shown in FIG. 9, the vehicle 900 includes the vehicle suspension system 100 shown in FIG. 1.

In some other embodiments, as shown in FIG. 10, the vehicle 900 includes the vehicle control apparatus shown in FIG. 8.

The present disclosure may be a system, a method, and/or a computer program product. The computer program product may include a computer-readable storage medium, and the computer-readable storage medium carries computer-readable program instructions used by the processor to perform the aspects of the present disclosure.

The computer-readable storage medium may be a tangible device that can save and store instructions used by an instruction execution device. The computer-readable storage medium may be, for example, but is not limited to an electrical storage device, a magnetic storage device, an optical storage device, an electromagnetic storage device, a semiconductor storage device, or any proper combination thereof. More specific examples (non-exhaustive examples) of the computer-readable storage medium include a portable computer disk, a hard disk, a random access memory (RAM), a read-only memory (ROM), an erasable programmable read-only memory (EPROM or a flash memory), a static random access memory (SRAM), a portable compact disk read-only memory (CD-ROM), a digital versatile disk (DVD), a memory stick, a floppy disk, a mechanical coding device, a punch card or a protruding structure in a groove on which instructions are stored, and any proper combination thereof. The computer-readable storage medium used herein is not interpreted as a transient signal, such as a radio wave or another freely propagated electromagnetic wave, an electromagnetic wave propagated through a waveguide or another transmission medium (for example, an optical pulse through a fiber cable), or an electrical signal transmitted through a wire.

The computer-readable program instructions described herein may be downloaded from the computer-readable storage medium to various computing/processing devices, or to an external computer or an external storage device through a network, for example, the Internet, a local area network, a wide area network, and/or a wireless network. The network may include a copper transmission cable, fiber transmission, wireless transmission, a router, a firewall, a switch, a gateway computer, and/or an edge server. A network adapter or a network interface in each computing/processing device receives the computer-readable program instructions from the network and forwards the computer-readable program instructions, to store the computer-readable program instructions in the computer-readable storage medium in each computing/processing device.

The computer program instructions used to perform the operations of the present disclosure may be assembly instructions, instruction set architecture (ISA) instructions, machine instructions, machine-related instructions, microcode, firmware instructions, status setting data, or source code or target code written in any combination of one or more programming languages. The programming languages include object-oriented programming languages such as Smalltalk and C++, and conventional procedural programming languages such as a "C" language or a similar programming language. The computer-readable program instructions may be completely executed on a user computer, partially executed on a user computer, executed as a separate software package, partially executed on a user computer and partially executed on a remote computer, or completely executed on a remote computer or server. In a case of a remote computer, the remote computer may be connected to a user computer through any type of network, including a local area network (LAN) or a wide area network (WAN), or may be connected to an external computer (for example, through the Internet by using an Internet service provider). In some embodiments, an electronic circuit, for example, a programmable logic circuit, a field programmable gate array (FPGA), or a programmable logic array (PLA), may be customized by using status information of the computer-readable program instructions. The electronic circuit may execute the computer-readable program instructions to implement the aspects of the present disclosure.

Various aspects of the present disclosure are described herein with reference to the flowcharts and/or block diagrams of the method, the apparatus (system), and the computer program product according to embodiments of the present disclosure. It should be understood that the computer-readable program instructions may be used to implement each block in the flowcharts and/or the block diagrams and a combination of blocks in the flowcharts and/or the block diagrams.

These computer-readable program instructions may be provided for a general-purpose computer, a dedicated computer, or a processor of another programmable data processing apparatus to generate a machine, so that an apparatus for implementing specified functions/actions in one or more blocks in the flowcharts and/or the block diagrams is generated when these instructions are executed by the computer or the processor of another programmable data processing apparatus. Alternatively, these computer-readable program instructions may be stored in the computer-readable storage medium. These instructions enable a computer, a programmable data processing apparatus, and/or another device to operate in a specific manner. Therefore, the computer-readable medium storing the instructions includes a product, and the product includes instructions for implementing various aspects of specified functions/actions in one or more blocks in the flowcharts and/or block diagrams.

Alternatively, the computer-readable program instructions may be loaded onto the computer, another programmable data processing apparatus, or another device, so that a series of operations and steps are performed on the computer, another programmable data processing apparatus, or another device, to generate a process implemented by the computer. Therefore, the instructions executed on the computer, another programmable data processing apparatus, or another device implement specified functions/actions in one or more blocks in the flowcharts and/or the block diagrams.

The flowcharts and the block diagrams in the accompanying drawings display system architectures, functions, and operations that may be implemented by systems, methods, and computer program products according to a plurality of embodiments of the present disclosure. In view of this, each block in the flowcharts or the block diagrams may represent a module, a program segment, or a part of the instructions. The module, the program segment, or this part of instructions includes one or more executable instructions used to implement a specified logical function. In some alternative implementations, functions marked in the blocks may alternatively be implemented in a sequence different from that marked in the accompanying drawings. For example, two consecutive blocks can actually be executed substantially in parallel, or sometimes may be executed in a reverse order, depending on the functions. It should be also noted that each block in the block diagrams and/or the flowcharts, and a combination of blocks in the block diagrams and/or the flowcharts may be implemented by a dedicated hardware-based system that performs specified functions or actions, or may be implemented by a combination of dedicated hardware and computer instructions. It is well-known to a person skilled in the art that implementation in a hardware manner, implementation in a software manner, and implementation in a combination of software and hardware are equivalent.

The embodiments of the present disclosure have been described above. The descriptions are examples but not exhaustive, and are not limited to the disclosed embodiments. Many modifications and changes are apparent to a person of ordinary skill in the art without departing from the scope and spirit of the described embodiments. Selection of the terms used in this specification is intended to best explain the principles of embodiments, actual application, or improvements to the technology in the market, or to enable another person of ordinary skill in the art to understand embodiments disclosed in this specification. The scope of the present disclosure is defined by the appended claims.

**Claims**

1.  A vehicle suspension system, comprising:

> a plurality of height sensors, the height sensors being configured to detect a height of a vehicle body; and
> the system being configured to maintain some suspension functions of the vehicle suspension system available when some of the plurality of height sensors fail.

2. The vehicle suspension system according to claim 1, wherein when some height sensors fail, types and/or a quantity of available suspension functions of the vehicle suspension system vary based on a quantity of failed height sensors.

3. The vehicle suspension system according to claim 2, wherein the quantity of available suspension functions varies based on the quantity of failed height sensors, wherein a greater quantity of failed height sensors indicates a smaller quantity of available suspension functions.

4. The vehicle suspension system according to any one of claims 1 to 3, wherein when some height sensors fail and the vehicle body is capable of being leveled, the types and/or the quantity of available suspension functions are determined based on the quantity of failed height sensors, wherein that the vehicle body is capable of being leveled means that each of a pitch angle and a roll angle of the vehicle body is capable of being adjusted to be within a corresponding angle range.

5. The vehicle suspension system according to claim 4, wherein when some height sensors fail and the vehicle body is not capable of being leveled, the type of the available suspension function is different from the type of the available suspension function when the vehicle body is capable of being leveled, wherein that the vehicle body is not capable of being leveled means that either the pitch angle or the roll angle of the vehicle body is not capable of being adjusted to be within the corresponding angle range; and/or
when some height sensors fail and the vehicle body is not capable of being leveled, the quantity of available suspension functions is less than the quantity of available suspension functions when the vehicle body is capable of being leveled.

6. The vehicle suspension system according to any one of claims 1 to 5, wherein the suspension function comprises a damping control function, a stiffness control function, a height adjustment function, and a height adjustment suppression function, wherein

the height adjustment function comprises at least one of a voice-controlled height adjustment function, a manual height adjustment function, a speed-dependent height adjustment function, a camping leveling function, an ultra-high escape function, a welcome function, an access function, a load balancing function, or a height return function; and
the height adjustment suppression function comprises at least one of a manual height adjustment suppression function, an automatic height adjustment suppression function, a suppression function of stopping height adjustment during a collision, or a suppression function of stopping height adjustment during maintenance.

7. The vehicle suspension system according to claim 6, wherein

when a single height sensor fails, the available suspension function comprises some functions in the height adjustment function, as well as the height adjustment suppression function, the damping control function, and the stiffness control function; or
when two height sensors fail, the available suspension function comprises the height adjustment suppression function and the damping control function; or
when three height sensors fail, the available suspension function comprises the height adjustment suppression function.

8. The vehicle suspension system according to claim 7, wherein when a single height sensor fails, an unavailable height adjustment function comprises at least one of the load balancing function, the ultra-high escape function, the camping leveling function, or the voice-controlled height adjustment function.

9. The vehicle suspension system according to any one of claims 1 to 8, wherein when the height sensor experiences one of two cases where hardware fails or an output value exceeds a limit range, the height sensor fails.

10. The vehicle suspension system according to claim 9, wherein when duration in which the height sensor experiences one of the two cases where the hardware fails or the output value exceeds the limit range reaches first duration, the height sensor fails.

11. The vehicle suspension system according to any one of claims 1 to 10, wherein the vehicle suspension system further comprises a plurality of dampers, and each of the dampers is disposed corresponding to each height sensor; and when some height sensors fail, a height of a damper corresponding to the failed height sensor is adjusted based on a height of a damper corresponding to a valid height sensor, to adjust each of the pitch angle and the roll angle of the vehicle body to be within the corresponding angle range.

12. A vehicle control method, comprising:

   maintaining some suspension functions of a vehicle suspension system available when some height sensors of the suspension system fail;
   wherein the height sensors are configured to detect a height of a vehicle body.

13. A vehicle, comprising the vehicle suspension system according to any one of claims 1 to 11.

14. The vehicle according to claim 13, comprising a control apparatus, the control apparatus comprising a memory and a processor, the memory storing executable instructions, and the instructions are used to control the processor to perform an operation to perform the vehicle control method according to claim 12.

Vehicle suspension system 100

| Height sensor 10B | Height sensor 10D |
|---|---|
| Valid √ | Invalid × |

| Height sensor 10A | Height sensor 10C |
|---|---|
| Invalid × | Invalid √ |

Suspension function of a suspension system:

| Suspension function F1 | √ |
|---|---|
| Suspension function F2 | × |
| Suspension function F3 | √ |
| Suspension function F4 | × |
| | |
| Suspension function Fn | √ |

FIG. 1a

Height sensor 10 — Height data → Control apparatus U1

Height sensor 10 — Hardware fault signal → Control apparatus U1

Control apparatus U1 — Road condition image → Imaging apparatus 40

Acceleration sensor 30 — Unsprung acceleration → Control apparatus U1

Control apparatus U1 — Roll angle, pitch angle / Driving acceleration → Inertial measurement unit 20

Active suspension 50 — Control signal → Control apparatus U1

Control apparatus U1 — Wheel speed data → Wheel speed sensor 60

FIG. 1b

FIG. 2

FIG. 3

FIG. 4

FIG. 5

| Determine that some height sensors of a suspension system fail | S6100 |

↓

| Maintain some suspension functions of the vehicle suspension system available | S6200 |

FIG. 6

Start

Determine whether a height sensor experiences one of two cases where hardware fails or an output value exceeds a limit range ~S1

N

Y

Record failure duration ~S2

N

Determine whether the failure duration reaches first duration ~S3

Y

Determine that the height sensor is in a failed state ~S4

Set a suspension function level based on a failure parameter ~S5

Obtain driving state information of a vehicle ~S6

N

Whether the driving state information of the vehicle matches a failure processing condition ~S7

Y

Level a vehicle body based on height data detected by the height sensor ~S8

Obtain a pitch angle and a roll angle of the vehicle body ~S9

Whether each of the pitch angle and the roll angle is within a corresponding angle range ~S10

Y → Determine a suspension function level and a failure control mode ~S11

N

Update a height difference based on a height value that is of a damper and that is detected by a valid height sensor and attitude data that reflects an attitude of the vehicle body ~S12

Control, based on an updated height difference and a set compensation amount, an action of an active suspension corresponding to a failed height sensor to adjust the attitude of the vehicle body of the vehicle ~S13

N

Whether a quantity of updates of the height difference is greater than or equal to a first quantity threshold? ~S14

Y

Whether the quantity of updates of the height difference is less than or equal to a second quantity threshold? ~S15

N → Stop adjustment of the attitude of the vehicle body and lower the suspension function level ~S17

Y

Increase, by a set step distance, an angle range corresponding to each of the pitch angle and the roll angle ~S16

FIG. 7

Vehicle control apparatus 800

| Processor 802 | ⟺ | Memory 801 |

FIG. 8

Vehicle 900

Vehicle suspension system 100

FIG. 9

Vehicle 900

Vehicle control apparatus 800

| Processor 802 | ⟺ | Memory 801 |

FIG. 10

## INTERNATIONAL SEARCH REPORT

| International application No. |
|---|
| **PCT/CN2024/080701** |

| A. | CLASSIFICATION OF SUBJECT MATTER |
|---|---|

B60G17/018(2006.01)i; B60G17/015(2006.01)i; B60G17/08(2006.01)i

According to International Patent Classification (IPC) or to both national classification and IPC

| B. | FIELDS SEARCHED |
|---|---|

Minimum documentation searched (classification system followed by classification symbols)

IPC: B60G

Documentation searched other than minimum documentation to the extent that such documents are included in the fields searched

Electronic data base consulted during the international search (name of data base and, where practicable, search terms used)

CNABS, CNTXT, CNKI, DWPI, ENTXT: 高度, 传感器, 悬架, 故障, 功能, height, sensor?, suspension?, fault, function

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 1974242 A (MANDO CORP.) 06 June 2007 (2007-06-06)<br>    claims 1-2 | 1-3, 9-14 |
| A | CN 115871394 A (BYD CO., LTD.) 31 March 2023 (2023-03-31)<br>    claim 5 | 1-14 |
| A | US 2009033044 A1 (OSHKOSH CORP.) 05 February 2009 (2009-02-05)<br>    claims 1-15 | 1-14 |
| A | CN 101112858 A (MANDO CORP.) 30 January 2008 (2008-01-30)<br>    abstract | 1-14 |
| A | CN 113459757 A (HEFEI UNIVERSITY OF TECHNOLOGY) 01 October 2021<br>(2021-10-01)<br>    abstract | 1-14 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 June 2024** | **23 June 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080701**

| Patent document cited in search report | | | Publication date (day/month/year) | Patent family member(s) | | | Publication date (day/month/year) |
|---|---|---|---|---|---|---|---|
| CN | 1974242 | A | 06 June 2007 | EP | 1792759 | A2 | 06 June 2007 |
| | | | | EP | 1792759 | A3 | 21 November 2007 |
| | | | | EP | 1792759 | B1 | 22 September 2010 |
| | | | | JP | 2007153330 | A | 21 June 2007 |
| | | | | US | 2007129865 | A1 | 07 June 2007 |
| | | | | DE | 602006017025 | D1 | 04 November 2010 |
| | | | | KR | 20070057477 | A | 07 June 2007 |
| | | | | KR | 100777641 | B1 | 21 November 2007 |
| CN | 115871394 | A | 31 March 2023 | None | | | |
| US | 2009033044 | A1 | 05 February 2009 | US | 8333390 | B2 | 18 December 2012 |
| CN | 101112858 | A | 30 January 2008 | KR | 20080010260 | A | 30 January 2008 |
| | | | | KR | 100829031 | B1 | 16 May 2008 |
| | | | | JP | 2008030736 | A | 14 February 2008 |
| | | | | DE | 602007007400 | D1 | 12 August 2010 |
| | | | | EP | 1884380 | A1 | 06 February 2008 |
| | | | | EP | 1884380 | B1 | 30 June 2010 |
| | | | | US | 2008023927 | A1 | 31 January 2008 |
| | | | | US | 7611153 | B2 | 03 November 2009 |
| CN | 113459757 | A | 01 October 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311277861X